# EUROPEAN PATENT APPLICATION

(11) **EP 4 640 505 A1**
(43) Date of publication of application: **29.10.2025**
(21) Application number: 22969080.5
(22) Date of filing: 20.12.2022
(51) Int. Cl.: B60T 11/26, B62L 3/02

(54) **PUMP FOR VEHICLE CLUTCHES OR BRAKES**

(71) Applicant: XIU RDI, S.L., 17243 Llambilles Gerona (ES)
(72) Inventor: SERRA ROQUETA, Josep, 17243 LLAMBILLES (Girona) (ES)
(74) Representative: Herrero & Asociados, S.L.
(86) International application number: PCT/ES2022/070816
(87) International publication number: WO 2024/133979

(57) **Abstract**

The pump for vehicle clutches or brakes comprises a piston (1) movable inside a housing (2); and a reservoir (3) in which a fluid is housed to drive the movement of the piston (1) inside the housing (2), wherein the reservoir (3) is hingedly mounted with respect to the housing (2) of the piston (1), being positionable at least in a first or second position.

It provides a pump for vehicle clutches or brakes that can be used on either the right or left side of the vehicle.

## Description

### Object of the invention

The present invention relates to a pump for vehicle clutches or brakes, in particular, for motorbikes, bicycles and similar vehicles comprising a handlebar.

### Background to the invention

In vehicles comprising handlebars, such as motorbikes and bicycles, the clutch and brake actuation is usually by means of a lever located on the handlebar itself.

For example, on a motorbike, the clutch has the function of activating and deactivating the flow of power from the engine to the driving wheel, influencing gear shifting, acceleration, speed changes and so on.

Hydraulic clutches are known to perform this function. Unlike mechanical clutches which are operated by means of a cable connected to the lever, hydraulic clutches work with fluids, obtaining the same result, in the same way that hydraulic brakes are known, which perform the same function as mechanical brakes.

Hydraulic clutches and brakes have a pump, comprising a reservoir in which the fluid used for actuation is housed.

In vehicles equipped with a handlebar, such as a motorbike or bicycle, it is nowadays necessary to have a pump for the right side and a different pump for the left side. Although these pumps have the same components, they are not the same because they are designed specifically for use on the right or left side of the vehicle, with the costs involved.

### Description of the invention

Therefore, an objective of the present invention is to provide a pump for vehicle clutches or brakes that allows its use indistinctly on the right or left side of the vehicle.

With the pump for vehicle clutches or brakes of the invention, the aforementioned disadvantages are solved, presenting other advantages that will be described below.

The pump for vehicle clutches or brakes according to the present invention is described in claim 1, and the dependent claims include additional features that are optional.

In particular, the pump for vehicle clutches or brakes according to the present invention comprises:
- a movable piston within a housing; and
- a reservoir in which a fluid is housed that drives the piston movement inside the housing,
in which the reservoir is hingedly mounted with respect to the housing of the piston, being positionable in at least a first or a second position.

Advantageously, wherein the first and second positions are rotated 180° with respect to the piston housing, so that the same pump can be used on either the right or left side of a vehicle handlebar depending on the position in which the reservoir is positioned.

According to a preferred embodiment, the reservoir comprises a through bore through which the piston housing is positioned.

Preferably, the housing is mounted on a base, and the base comprises a support bracket, for attaching it to a part of a vehicle.

Furthermore, the pump for vehicle clutches or brakes according to the present invention also preferably comprises a pusher in contact with one end of the piston.

In addition, according to a preferred embodiment, the reservoir comprises a push button.

In particular, the pump for vehicle clutches or brakes according to the present invention has the following advantages, among others:
It allows the same pump to be mounted on either the right or left side of the handlebar, for example, by simply rotating the reservoir around its joint.

In addition, the fact that the reservoir is a separate part has several advantages. Firstly, it allows multiple entries into the piston cylinder to be machined radially in the same position. This means an improvement in pump operation, since, in the same stroke, instead of opening a single hole, it opens multiple holes, allowing rapid reloading or bleeding without losing effective pump stroke.

In addition, different reservoir capacities and different types of reservoirs made of different materials than the pump body can be fitted as required.

The reservoir hinge also makes it easier to bleed the circuit, as it can be placed in an upright position when bleeding and once finished, it is hinged to its most recessed position relative to the handlebars, for example.

In other words, multiple advantages are achieved in a very simple way, enabling production to be made cheaper.

### Brief description of the drawings

For a better understanding of the above, drawings are provided in which, schematically and by way of non-limiting example only, show a practical case of embodiment.
Figure 1 is a perspective view of a pump for vehicle clutches or brakes according to the present invention, mounted with an actuating lever; and
Figure 2 is a section view of a pump for vehicle clutches or brakes in accordance with the present invention.

### Description of a preferred embodiment

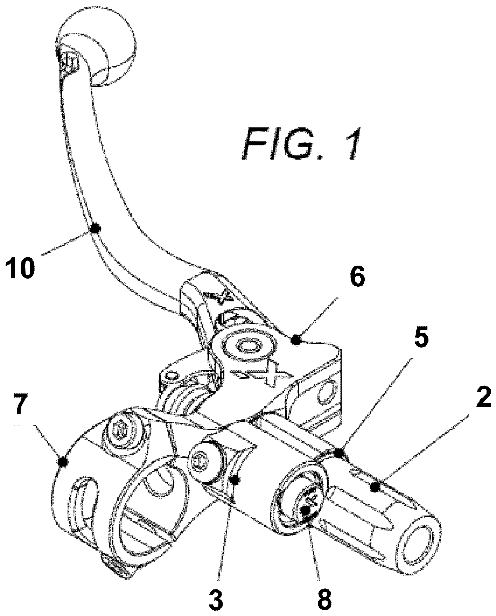

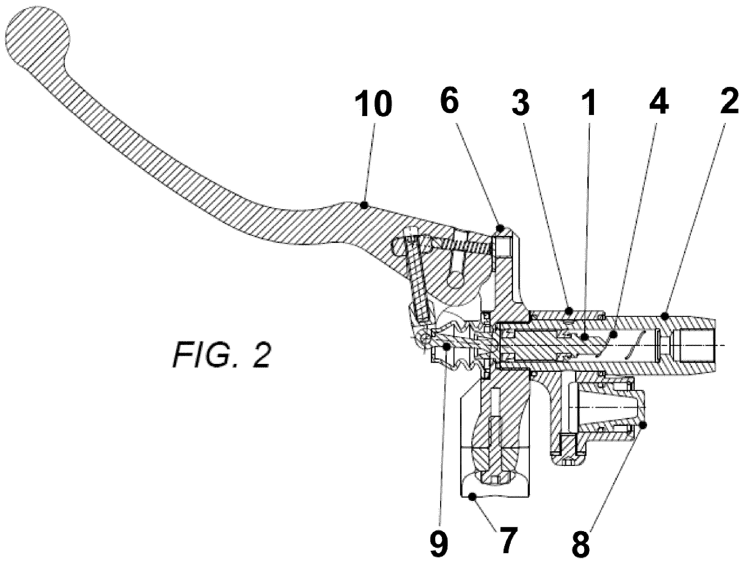

Figures 1 and 2 show the pump for vehicle clutches or brakes according to the present invention. As indicated above, the pump is specially designed for use in vehicles fitted with handlebars, such as motorbikes or bicycles, and can be mounted on either the right or left side of the handlebars, indistinctly.

The pump comprises a piston 1 which is movable inside a housing 2 and a reservoir 3 in which a liquid is housed which drives the movement of the piston 1 inside the housing 2 against the action of a spring 4.

In addition, this reservoir 3 comprises a push button 8, as shown in the figures.

In order to enable the pump according to the present invention to be mounted on the right or left side of a handlebar, the reservoir 3 is mounted in an hinged manner with respect to the housing 2 of the piston 1, being positionable in at least a first or a second position, which preferably are rotated 180° with respect to the housing 2 of the piston 1.

In this way, the operator mounting the pump on the vehicle can position the reservoir 3 in any desired position in relation to the housing 2 of the piston 1.

To facilitate rotation of the reservoir 3 around the housing 2 of the piston 1, the reservoir 3 comprises a through hole 5 through which the housing 2 of the piston 1 is positioned.

Furthermore, the pump according to the present invention comprises a base 6 on which the housing 2 of the piston 1 is mounted, which base 6 comprises a support bracket 7 for mounting the pump on a vehicle.

Furthermore, as shown in figure 2, the pump according to the present invention also comprises a pusher 9 which is in contact with one end of the piston 1.

The operation of the pump according to the present invention is that usual in a hydraulic clutch or brake, so that when a driver of the vehicle actuates a lever 10, the clutch or brake is actuated, displacing the piston 1 inside its housing 2, and when the driver stops actuating the lever 10, the piston 1 returns to its original position.

Although reference has been made to a specific embodiment of the invention, it is obvious to a person skilled in the art that the pump for vehicle clutches or brakes described is susceptible to numerous variations and modifications, and that all the details mentioned can be replaced by technically equivalent ones, without departing from the scope of protection defined by the appended claims.

## Claims

1. Pump for vehicle clutches or brakes, comprising:
- a piston (1) movable within a housing (2); and
- a reservoir (3) in which a fluid is housed which drives the movement of the piston (1) inside the housing (2),
**characterized in that** the reservoir (3) is hingedly mounted with respect to the housing (2) of the piston (1), being positionable at least in a first or second position.

2. Pump for vehicle clutches or brakes according to claim 1, wherein the first and second positions are rotated 180° with respect to the housing (2) of the piston (1).

3. Pump for vehicle clutches or brakes according to claim 1 or 2, wherein the reservoir (3) comprises a through hole (5) through which the housing (2) of the piston (1) is positioned.

4. Pump for vehicle clutches or brakes according to any one of the previous claims, wherein the housing (2) is mounted on a base (6).

5. Pump for vehicle clutches or brakes according to claim 4, wherein the base (6) comprises a support bracket (7).

6. Pump for vehicle clutches or brakes according to any one of the previous claims, also comprising a pusher (9) in contact with one end of the piston (1).

7. Pump for vehicle clutches or brakes according to any one of the previous claims, wherein the reservoir (3) comprises a push button (8).
